# EUROPEAN PATENT APPLICATION

(11) **EP 4 635 906 A1**
(43) Date of publication of application: **22.10.2025**
(21) Application number: 24747169.1
(22) Date of filing: 16.01.2024
(51) Int. Cl.: C01B 3/04

(54) **AMMONIA DECOMPOSITION APPARATUS**

(30) Priority: 27.01.2023 JP 2023010920
(71) Applicant: Mitsubishi Heavy Industries, Ltd., Tokyo 100-8332 (JP)
(72) Inventor: ISOGAI, Kohei, Yokohama-shi, Kanagawa 220-8401 (JP); TERATANI, Satoru, Yokohama-shi, Kanagawa 220-8401 (JP); SAKURAI, Mikiya, Yokohama-shi, Kanagawa 220-8401 (JP); HAYAMI, Shohei, Yokohama-shi, Kanagawa 220-8401 (JP)
(74) Representative: Studio Torta S.p.A.
(86) International application number: PCT/JP2024/000966
(87) International publication number: WO 2024/157838

(57) **Abstract**

This ammonia decomposition apparatus is provided with: a reactor in which a catalyst for a decomposition reaction for decomposing ammonia that is a starting material into hydrogen and nitrogen is filled; a burner which is disposed in the reactor on the upstream side beyond the catalyst and is used for combusting hydrogen; and an ammonia supply line through which ammonia is supplied into the reactor on the upstream side beyond the catalyst.

## Description

### Technical Field

The present disclosure relates to an ammonia decomposition apparatus.

The present application claims priority based on Japanese Patent Application No. 2023-010920 filed in Japan on January 27, 2023, the contents of which are incorporated herein by reference.

### Background Art

PTL 1 discloses an ammonia decomposition apparatus that decomposes ammonia into hydrogen and nitrogen. In the ammonia decomposition apparatus, a burner for combusting ammonia is provided on an upstream side of a catalyst for a decomposition reaction of ammonia in a reactor filled with the catalyst. Combustion heat of ammonia from the burner can be used as heat for causing the decomposition reaction of ammonia, which is an endothermic reaction.

### Citation List

### Patent Literature

[PTL 1] PCT Japanese Translation Patent Publication No. 2020-531388

### Summary of Invention

### Technical Problem

However, in order to stably combust ammonia in the burner, it is necessary to raise a temperature of the ammonia before the ammonia is supplied to the burner. In this case, high-temperature ammonia flows through a pipe for supplying ammonia to the burner, so that the ammonia reacts with a metallic material of the pipe to nitride the metallic material, which may lead to a decrease in mechanical strength and, consequently, a rupture of the pipe.

In view of the above circumstances, an object of at least one embodiment of the present disclosure is to provide an ammonia decomposition apparatus capable of suppressing nitridation of a pipe for supplying ammonia to a reactor in which ammonia is decomposed.

### Solution to Problem

In order to achieve the above object, an ammonia decomposition apparatus according to the present disclosure includes a reactor filled with a catalyst for a decomposition reaction for decomposing ammonia, which is a starting material, into hydrogen and nitrogen, a burner that is provided in the reactor on an upstream side of the catalyst and that is used for combusting hydrogen, and an ammonia supply line through which ammonia is supplied into the reactor on the upstream side of the catalyst.

In addition, another ammonia decomposition apparatus according to the present disclosure includes a reactor filled with a catalyst for a decomposition reaction for decomposing ammonia, which is a starting material, into hydrogen and nitrogen, a burner that is provided in the reactor on an upstream side of the catalyst and that is used for combusting a part of ammonia of the starting material, an ammonia supply line through which an ammonia-containing gas containing ammonia, which is the starting material, is supplied to the burner, an outflow gas line through which an outflow gas containing hydrogen and nitrogen generated by decomposition of ammonia in the reactor flows after flowing out from the reactor, a first heater that is used for heating the ammonia-containing gas flowing through the ammonia supply line, and that exchanges heat between the ammonia-containing gas and the outflow gas flowing through the outflow gas line, and a hydrogen supply line through which a hydrogen-containing gas containing hydrogen is supplied to the ammonia-containing gas flowing through the ammonia supply line on the upstream side of the first heater.

### Advantageous Effects of Invention

With the ammonia decomposition apparatus of the present disclosure, by using combustion heat of hydrogen from the burner as heat for causing the decomposition reaction of ammonia, which is an endothermic reaction, it is not necessary to raise a temperature of ammonia flowing through the ammonia supply line, or a degree of raising the temperature of the ammonia can be suppressed, so that it is possible to suppress nitridation of the ammonia supply line due to a reaction between high-temperature ammonia flowing through the ammonia supply line and a metallic material of the ammonia supply line.

With the other ammonia decomposition apparatus of the present disclosure, since the ammonia-containing gas is heated in the first heater provided in the ammonia supply line through which the ammonia-containing gas is supplied to the burner, the ammonia and the metallic material of the ammonia supply line may react with each other downstream of the first heater, resulting in nitridation of the ammonia supply line. However, a concentration of the ammonia in the ammonia-containing gas is reduced by supplying the hydrogen-containing gas to the ammonia-containing gas on the upstream side of the first heater, so that it is possible to suppress the nitridation of the ammonia supply line downstream of the first heater.

### Brief Description of Drawings

Fig. 1 is a schematic configuration diagram of an ammonia decomposition apparatus according to Embodiment 1 of the present disclosure.
Fig. 2 is a schematic configuration diagram of a modification example of the ammonia decomposition apparatus according to Embodiment 1 of the present disclosure.
Fig. 3 is a schematic configuration diagram of another modification example of the ammonia decomposition apparatus according to Embodiment 1 of the present disclosure.
Fig. 4 is a schematic configuration diagram of still another modification example of the ammonia decomposition apparatus according to Embodiment 1 of the present disclosure.
Fig. 5 is a schematic configuration diagram of an ammonia decomposition apparatus according to Embodiment 2 of the present disclosure.
Fig. 6 is a schematic configuration diagram of a modification example of the ammonia decomposition apparatus according to Embodiment 2 of the present disclosure.
Fig. 7 is a schematic configuration diagram of another modification example of the ammonia decomposition apparatus according to Embodiment 2 of the present disclosure.
Fig. 8 is a schematic configuration diagram of a reactor of still another modification example of the ammonia decomposition apparatus according to Embodiment 2 of the present disclosure.
Fig. 9 is a schematic configuration diagram of a reactor of still another modification example of the ammonia decomposition apparatus according to Embodiment 2 of the present disclosure.
Fig. 10 is a schematic configuration diagram of a reactor of still another modification example of the ammonia decomposition apparatus according to Embodiment 2 of the present disclosure.
Fig. 11 is a perspective view of a pipe member provided in the reactor shown in Fig. 10.
Fig. 12 is a schematic configuration diagram of a reactor of still another modification example of the ammonia decomposition apparatus according to Embodiment 2 of the present disclosure.

### Description of Embodiments

Hereinafter, an ammonia decomposition apparatus according to embodiments of the present disclosure will be described with reference to the drawings. The embodiments which will be described below show aspects of the present disclosure and do not limit the disclosure, and any change can be made within the scope of the technical idea of the present disclosure.

### (Embodiment 1)

### <Configuration of Ammonia Decomposition Apparatus according to Embodiment 1 of Present Disclosure>

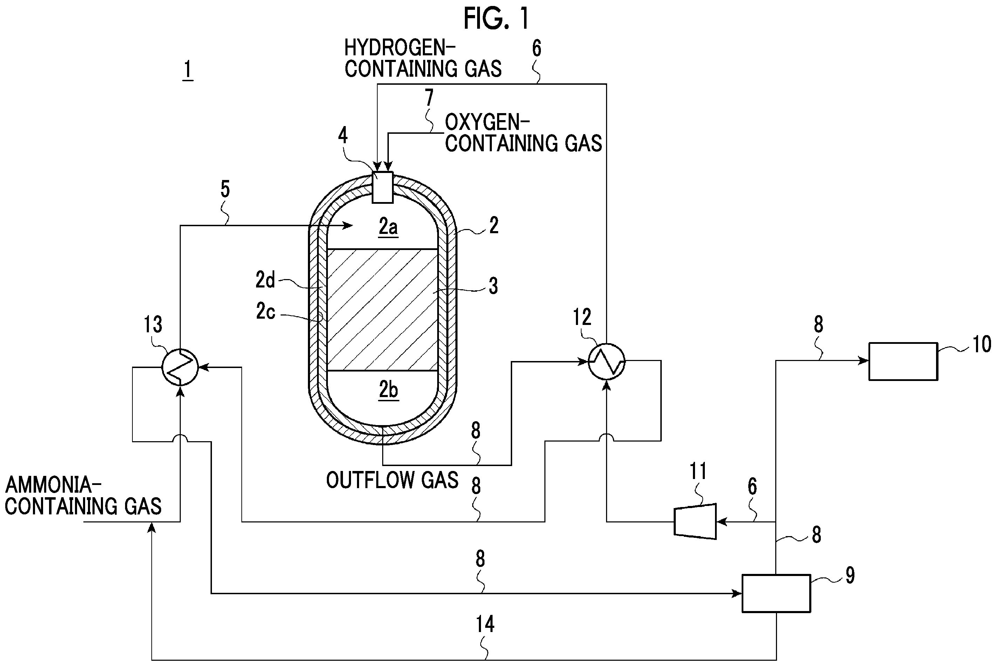

As shown in Fig. 1, an ammonia decomposition apparatus 1 according to Embodiment 1 of the present disclosure is an apparatus that decomposes ammonia, which is a starting material, into hydrogen and nitrogen through a reaction represented by the following reaction formula (1). The ammonia decomposition apparatus 1 includes a reactor 2 filled with a catalyst 3 for a decomposition reaction of ammonia represented by Reaction Formula (1).

2NH₃ → N₂ +3H₂ ... (1)

In the reactor 2, an upstream space 2a and a downstream space 2b are configured on an upstream side and a downstream side of the catalyst 3, respectively. A burner 4 for combusting hydrogen is provided on the upstream side of the catalyst 3 in the reactor 2. An ammonia supply line 5 through which an ammonia-containing gas containing ammonia is supplied to the upstream side of the catalyst, that is, to the upstream space 2a, is connected to the reactor 2. A hydrogen supply line 6 through which a hydrogen-containing gas (specific example will be described below) containing hydrogen is supplied to the burner 4 and an oxygen supply line 7 through which an oxygen-containing gas (for example, air) containing oxygen is supplied to the burner 4 are connected to the burner 4.

One end of an outflow gas line 8 through which an outflow gas flowing out from the reactor 2 flows is connected to the reactor 2 so as to communicate with the downstream space 2b. According to Reaction Formula (1), the outflow gas contains nitrogen and hydrogen. For this reason, the other end of the outflow gas line 8 is connected to consumption/storage equipment 10 for consuming or storing the outflow gas containing nitrogen and hydrogen. In addition, the outflow gas may contain unreacted ammonia. Therefore, the outflow gas line 8 may be provided with an ammonia recovery device 9 for removing ammonia from the outflow gas. In order to return the ammonia removed from the outflow gas by the ammonia recovery device 9 to the ammonia supply line 5, a recovery ammonia line 14 connecting the ammonia recovery device 9 and the ammonia supply line 5 may be provided. The configuration of the ammonia recovery device 9 is not particularly limited, and may be, for example, a water scrubber, a pressure swing adsorption (PSA) device, or the like. In a case where a decomposition rate of ammonia in the reactor 2 is high and the unreacted ammonia contained in the outflow gas is small, the ammonia recovery device 9 does not need to be provided.

The hydrogen supply line 6 can be configured to be connected to hydrogen storage equipment, a hydrogen production device, or the like provided inside or outside the ammonia decomposition apparatus 1 to supply a hydrogen-containing gas from the hydrogen storage equipment, the hydrogen production device, or the like, or the hydrogen supply line 6 can be configured to branch off from the outflow gas line 8. In the latter configuration, the hydrogen supply line 6 is provided with a compressor 11 for increasing the pressure of the outflow gas, that is, the hydrogen-containing gas. In a case where the outflow gas line 8 is provided with the ammonia recovery device 9, the hydrogen supply line 6 may be configured to branch off from the outflow gas line 8 on the downstream side of the ammonia recovery device 9, or may be configured to branch off from the outflow gas line 8 on the upstream side of the ammonia recovery device 9.

A first heat exchanger 12 for heating the hydrogen-containing gas may be provided in the hydrogen supply line 6 (on the downstream side of the compressor 11 in a case where the compressor 11 is provided in the hydrogen supply line 6). The outflow gas line 8 is configured to pass through the first heat exchanger 12 so that the hydrogen-containing gas is heated in the first heat exchanger 12 by heat exchange with the outflow gas flowing out from the reactor 2. In addition, a second heat exchanger 13 for heating the ammonia-containing gas may be provided in the ammonia supply line 5. The outflow gas line 8 is configured to pass through the second heat exchanger 13 so that the ammonia-containing gas is heated in the second heat exchanger 13 by heat exchange with the outflow gas after the heat exchange with the hydrogen-containing gas in the first heat exchanger 12.

In a case where the ammonia recovery device 9 is provided in the ammonia decomposition apparatus 1, it is preferable that the recovery ammonia line 14 is configured to be connected to the ammonia supply line 5 on the upstream side of the second heat exchanger 13 so that heat the ammonia removed from the outflow gas by the ammonia recovery device 9 is also heated in the second heat exchanger 13.

Although not an essential configuration, an inner surface 2c of the reactor 2 may be covered with a fireproof material 2d. In a case where the fireproof material 2d is provided, the catalyst 3 is filled on an opposite side of the inner surface 2c with respect to the fireproof material 2d. As the fireproof material 2d, for example, bricks, fireproof bricks, or fireproof cement, or the like can be used.

### <Operation of Ammonia Decomposition Apparatus according to Embodiment 1 of Present Disclosure>

Next, an operation of the ammonia decomposition apparatus 1 according to Embodiment 1 of the present disclosure will be described. An ammonia-containing gas flows into the upstream space 2a in the reactor 2 via the ammonia supply line 5. In addition, a hydrogen-containing gas is supplied to the burner 4 via the hydrogen supply line 6, an oxygen-containing gas is supplied to the burner 4 via the oxygen supply line 7, and hydrogen is combusted in the burner 4. Combustion gas containing combustion heat generated by the combustion of hydrogen is discharged from the burner 4 to the upstream space 2a, and the ammonia-containing gas and the combustion gas are mixed in the upstream space 2a, thereby raising a temperature of the ammonia-containing gas.

Since the ammonia-containing gas is heated by the combustion gas of hydrogen, it is not always necessary to heat the ammonia-containing gas to a temperature required for the decomposition reaction of ammonia when the ammonia-containing gas flows through the ammonia supply line 5, or to supply the ammonia-containing gas heated to the temperature to the upstream space 2a via the ammonia supply line 5. Therefore, the temperature of the ammonia-containing gas flowing through the ammonia supply line 5 can be made lower than a temperature at which the ammonia and a metallic material of the ammonia supply line react with each other, so that it is possible to suppress the nitridation of the ammonia supply line 5. In addition, hydrogen is combusted in the burner 4 and ammonia is not directly combusted in the burner 4, so that it is possible to suppress the generation of nitrogen oxide (NOx).

The mixed gas of the ammonia-containing gas that has raised in temperature and the combustion exhaust gas in the upstream space 2a passes through the catalyst 3. When the mixed gas passes through the catalyst 3, at least a part of the ammonia in the mixed gas is decomposed into hydrogen and nitrogen due to a catalytic action of the catalyst 3 by generating the decomposition reaction of ammonia represented by Reaction Formula (1), and an outflow gas containing hydrogen, nitrogen, and unreacted ammonia flows out from the downstream space 2b and flows through the outflow gas line 8. In a case where the unreacted ammonia contained in the outflow gas is small, the outflow gas flowing out from the downstream space 2b is supplied to the consumption/storage equipment 10 via the outflow gas line 8.

In this way, by using the combustion heat of hydrogen from the burner 4 as heat for causing the decomposition reaction of ammonia, which is an endothermic reaction, it is not necessary to raise the temperature of the ammonia-containing gas flowing through the ammonia supply line 5, or the degree of raising the temperature of the ammonia can be suppressed, so that it is possible to suppress the nitridation of the ammonia supply line 5 due to the reaction between the high-temperature ammonia flowing through the ammonia supply line 5 and the metallic material of the ammonia supply line 5.

In a case where the first heat exchanger 12 and the second heat exchanger 13 are provided in the ammonia decomposition apparatus 1, the hydrogen-containing gas flowing through the hydrogen supply line 6 is heated by exchanging heat with the outflow gas flowing out from the reactor 2 in the first heat exchanger 12, and is supplied to the burner 4. In addition, the ammonia-containing gas flowing through the ammonia supply line 5 is heated by exchanging heat with the outflow gas after the heat exchange with the hydrogen-containing gas in the first heat exchanger 12 in the second heat exchanger 13, and flows into the upstream space 2a. By providing the first heat exchanger 12 and the second heat exchanger 13 in the ammonia decomposition apparatus 1, the temperatures of the ammonia-containing gas and the hydrogen-containing gas can be raised, so that it is possible to improve the amount of heat recovery in the ammonia decomposition apparatus.

On the other hand, when the outflow gas that has just flowed out from the reactor 2 and the ammonia-containing gas exchange heat with each other, the temperature of the outflow gas becomes too high, and the temperature of the ammonia-containing gas becomes too high, which may cause the nitridation of the ammonia supply line 5. With respect to this, in the configuration in which the first heat exchanger 12 and the second heat exchanger 13 are provided in the ammonia decomposition apparatus 1, the outflow gas flowing out from the reactor 2 exchanges heat with the hydrogen-containing gas, and the outflow gas whose temperature has lowered below the temperature at which the outflow gas flows out from the reactor 2 exchanges with the ammonia-containing gas, whereby the temperature of the ammonia-containing gas can be raised to such an extent that the ammonia supply line 5 is not nitrided, so that it is possible to suppress the nitridation of the ammonia supply line 5.

As described above, when the unreacted ammonia contained in the outflow gas cannot be ignored, the ammonia recovery device 9 can be provided in the outflow gas line 8 (downstream of the second heat exchanger 13 in a case where the first heat exchanger 12 and the second heat exchanger 13 are provided). In this case, in the ammonia recovery device 9, ammonia is recovered from the outflow gas, and the outflow gas containing hydrogen, nitrogen, and a trace amount of ammonia that is not recovered is partially supplied to the burner 4 as a hydrogen-containing gas via the hydrogen supply line 6, and the rest is supplied to the consumption/storage equipment 10. The recovered ammonia is supplied to the ammonia supply line 5 via the recovery ammonia line 14, and is supplied to the reactor 2 as a part of ammonia of the starting material. In this manner, the decomposition rate of ammonia can be improved.

By adopting the configuration in which the hydrogen supply line 6 branches off from the outflow gas line 8, a part of the outflow gas can be supplied to the burner 4 as a hydrogen-containing gas. With such a configuration, it is not necessary to supply hydrogen from outside the ammonia decomposition apparatus 1, so that the ammonia decomposition apparatus 1 can be operated independently without depending on a device external to the ammonia decomposition apparatus 1. In addition, as described above, the outflow gas contains not only hydrogen but also nitrogen. The burner 4 for combusting hydrogen has a higher combustion gas temperature than a general hydrocarbon burner, which may affect a design of a main body of the burner 4 and peripheral equipment of the burner 4. With respect to this, by using the nitrogen-containing outflow gas as the hydrogen-containing gas, the temperature of the combustion gas can be reduced as compared to a case where pure hydrogen is combusted, thereby reducing such an effect.

In a case where the ammonia recovery device 9 is provided in the outflow gas line 8, when the hydrogen supply line 6 is configured to branch off from the outflow gas line 8 on the downstream side of the ammonia recovery device 9 as shown in Fig. 1, the outflow gas after the ammonia is removed from the outflow gas in the ammonia recovery device 9 is supplied to the burner 4 as a hydrogen-containing gas, so that it is possible to suppress consumption of a part of the unreacted ammonia through combustion in the burner 4.

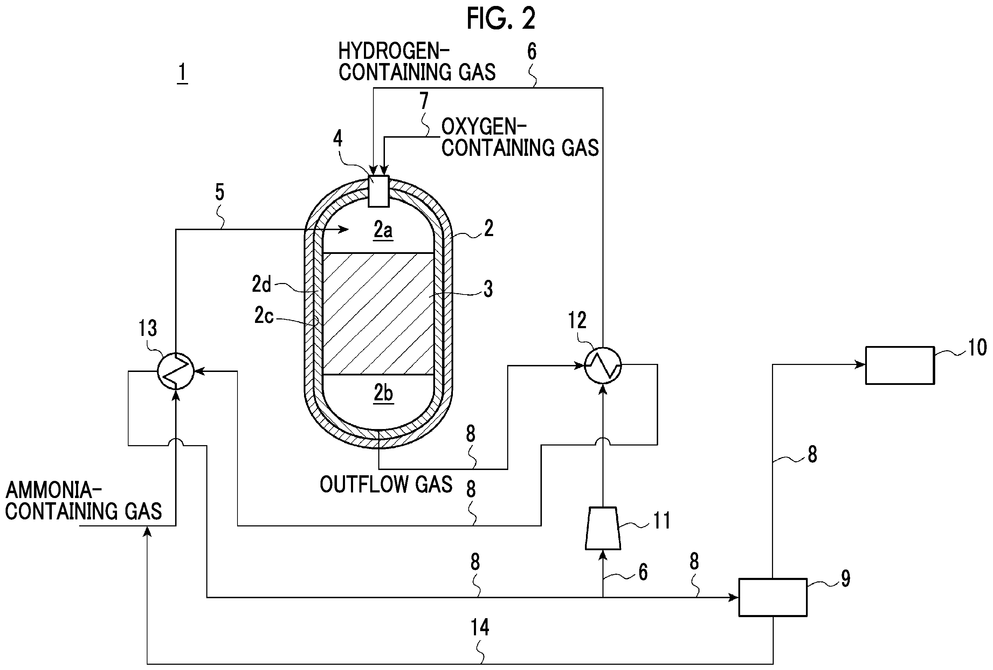

Note that, in a case where the decomposition rate of ammonia in the reactor 2 is high and the unreacted ammonia contained in the outflow gas is small, the hydrogen supply line 6 can be configured to branch off from the outflow gas line 8 on the upstream side of the ammonia recovery device 9 as shown in Fig. 2. In this configuration, a part of the outflow gas can be supplied to the burner 4 as a hydrogen-containing gas without a pressure loss in the ammonia recovery device 9 and a thermal loss due to cooling in the ammonia recovery device 9, so that it is possible to improve the energy efficiency of the entire ammonia decomposition apparatus 1. However, as long as this configuration is adopted, the hydrogen-containing gas having a high ammonia concentration is supplied to the burner 4 as compared with a case where the hydrogen supply line 6 branches off from the outflow gas line 8 on the downstream side of the ammonia recovery device 9. Therefore, NOx derived from ammonia may be generated due to the temperature of the combustion in the burner 4. Note that, since at least a part of the generated NOx can be converted into nitrogen and water, for example, by a reaction represented by the following reaction formula (2), it is possible to reduce the influence on the equipment on the downstream side of the reactor 2.

6NO₂ +8NH₃ → 7N₂ +12H₂O ... (2)

### <Modification Example of Ammonia Decomposition Apparatus according to Embodiment 1 of Present Disclosure>

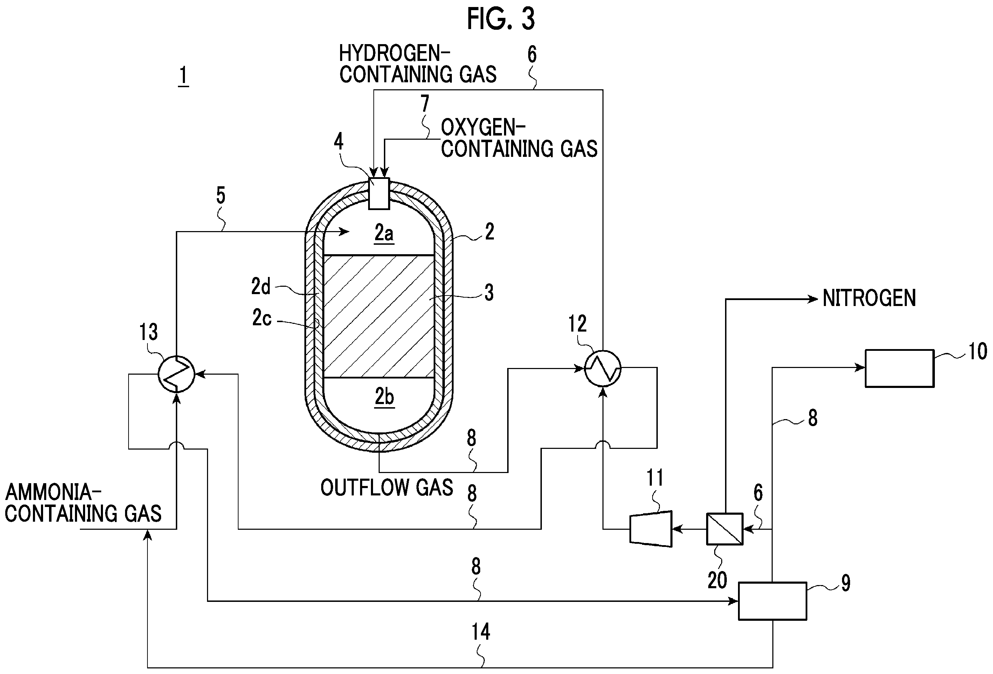

As shown in Fig. 3, in a case where the hydrogen-containing gas is a part of the outflow gas, a nitrogen removal device 20 that removes nitrogen from the hydrogen-containing gas flowing through the hydrogen supply line 6 may be provided in the hydrogen supply line 6. The configuration of the nitrogen removal device 20 is not particularly limited, and for example, a membrane separation device including a separation membrane capable of separating hydrogen and nitrogen can be used. In a case where the first heat exchanger 12 is provided in the hydrogen supply line 6, it is preferable to provide the nitrogen removal device 20 on the upstream side of the first heat exchanger 12, and it is preferable to provide the nitrogen removal device 20 on the upstream side of the compressor 11. In addition, in a case where the nitrogen removal device 20 is a membrane separation device, it is not preferable to entrain ammonia into the nitrogen removal device 20. Therefore, it is preferable to provide the nitrogen removal device 20 in the hydrogen supply line 6 branching off from the outflow gas line 8 on the downstream side of the ammonia recovery device 9.

In the ammonia decomposition apparatus 1 having the configuration described in Fig. 3, nitrogen is separated from the hydrogen-containing gas in the nitrogen removal device 20 and purged out of the system. As a result, a hydrogen-containing gas having a high hydrogen concentration is supplied to the burner 4 as compared to the ammonia decomposition apparatus 1 having the configuration shown in Fig. 1 or 2. As described above, there is a problem in that the higher the hydrogen concentration in the hydrogen-containing gas, the higher the temperature of the combustion gas. However, the nitrogen removal device 20 can be provided in the hydrogen supply line 6 by appropriately selecting the specifications of the burner 4 and appropriately designing the fireproof construction of the reactor 2. By providing the nitrogen removal device 20, a volumetric flow rate of the hydrogen-containing gas supplied to the burner 4 can be reduced, so that the size of the hydrogen supply line 6 and the size of the compressor 11 in a case where the compressor 11 for increasing the pressure of the hydrogen-containing gas is provided in the hydrogen supply line 6 can be reduced. As a result, the ammonia decomposition apparatus 1 can be made compact.

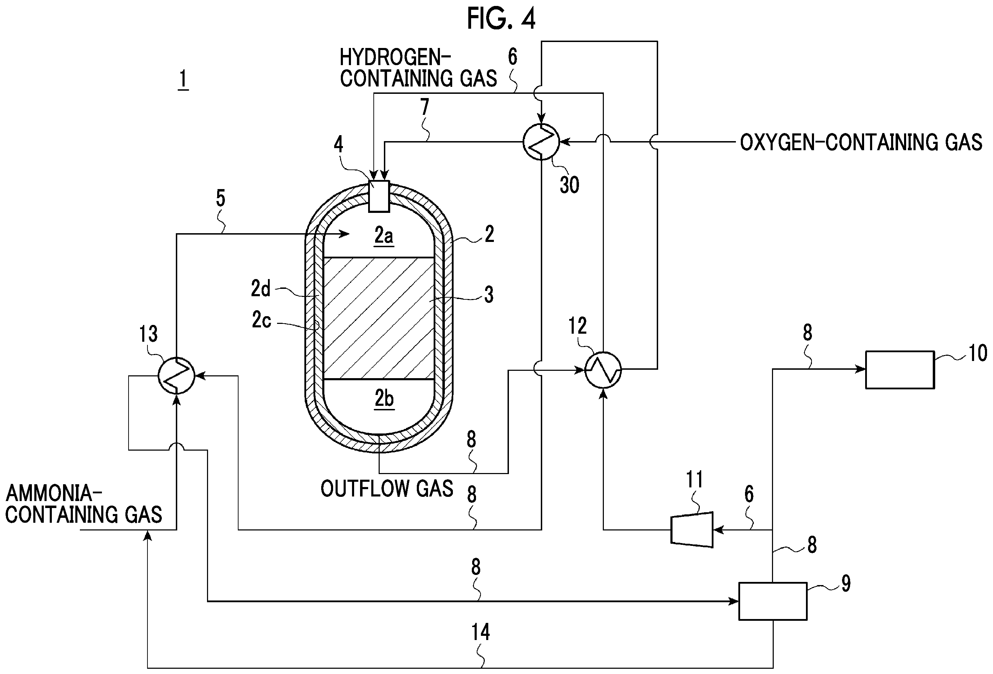

As shown in Fig. 4, in addition to the configuration in which the first heat exchanger 12 and the second heat exchanger 13 are provided, a third heat exchanger 30 that exchanges heat between the oxygen-containing gas flowing through the oxygen supply line 7 and the outflow gas after the heat exchange with the hydrogen-containing gas in the first heat exchanger 12 may be further provided. In this configuration, the oxygen-containing gas is heated by exchanging heat with the outflow gas in the third heat exchanger 30 and is supplied to the burner 4. In addition, the outflow gas that exchanges heat with the ammonia-containing gas in the second heat exchanger 13 is the outflow gas that has exchanged heat with the hydrogen-containing gas in the first heat exchanger 12 and exchanged heat with the oxygen-containing gas in the third heat exchanger 30.

In this configuration, after the outflow gas flowing out from the reactor 2 exchanges heat with the hydrogen-containing gas, the outflow gas further exchanges heat with the oxygen-containing gas, and the outflow gas whose temperature has lowered below the temperature at which the outflow gas flows out from the reactor 2 exchanges with the ammonia-containing gas, whereby the temperature of the ammonia-containing gas can be raised to such an extent that the ammonia supply line 5 is not nitrided, so that it is possible to suppress the nitridation of the ammonia supply line 5. In addition, the temperatures of the ammonia-containing gas and the hydrogen-containing gas can also be raised, so that it is possible to improve the amount of heat recovery in the ammonia decomposition apparatus 1. Further, since the amount of hydrogen and oxygen consumed in the combustion in the burner 4 can be reduced by increasing the amount of heat recovery, the configuration of the ammonia decomposition apparatus 1 can also be made compact.

### (Embodiment 2)

Next, an ammonia decomposition apparatus according to Embodiment 2 of the present disclosure will be described. The ammonia decomposition apparatus according to Embodiment 2 is different from that of Embodiment 1 in that the configuration of the burner provided in the reactor 2 is changed. Further, in Embodiment 2, the same components as those in Embodiment 1 are designated by the same reference signs, and the detailed descriptions thereof will not be repeated.

### <Configuration of Ammonia Decomposition Apparatus according to Embodiment 2 of Present Disclosure>

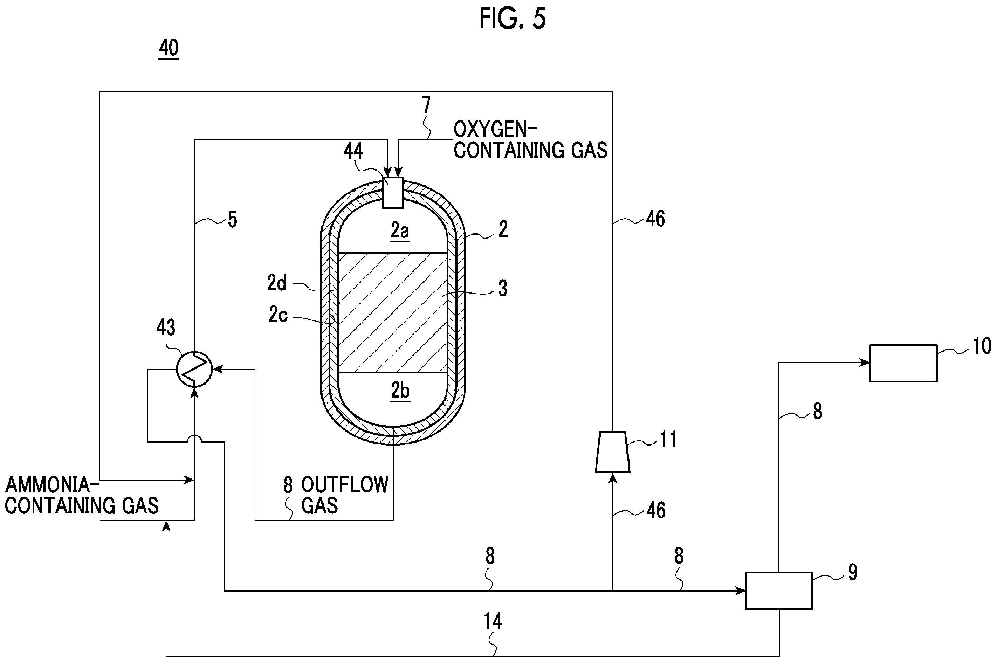

As shown in Fig. 5, a burner 44 for combusting a part of ammonia of a starting material is provided on the upstream side of the catalyst 3 in the reactor 2 of an ammonia decomposition apparatus 40 according to Embodiment 2 of the present disclosure. The ammonia supply line 5 through which an ammonia-containing gas containing ammonia flows and the oxygen supply line 7 through which an oxygen-containing gas (for example, air) containing oxygen is supplied to the burner 44 are connected to the burner 44. The ammonia supply line 5 is provided with a first heater 43 for heating the ammonia-containing gas. The outflow gas line 8 is configured to pass through the first heater 43 so that the ammonia-containing gas is heated in the first heater 43 by heat exchange with the outflow gas flowing out from the reactor 2. A hydrogen supply line 46 through which a hydrogen-containing gas containing hydrogen is supplied to the ammonia-containing gas flowing through the ammonia supply line 5 is provided on the upstream side of the first heater 43.

The hydrogen supply line 46 can be configured to be connected to hydrogen storage equipment, a hydrogen production device, or the like provided inside or outside the ammonia decomposition apparatus 40 to supply a hydrogen-containing gas from the hydrogen storage equipment, the hydrogen production device, or the like, or the hydrogen supply line 46 can be configured to branch off from the outflow gas line 8. In a case where the ammonia recovery device 9 is provided in the outflow gas line 8, the hydrogen supply line 46 may be configured to branch off from either the upstream side or the downstream side of the ammonia recovery device 9 (Fig. 5 exemplarily shows a configuration in which the hydrogen supply line 46 branches off from the upstream side of the ammonia recovery device 9). In the configuration in which the hydrogen supply line 46 branches off from the outflow gas line 8, the hydrogen supply line 46 may be provided with the compressor 11 for increasing the pressure of the outflow gas, which is a hydrogen-containing gas. The configuration of the reactor 2 and the configuration of the ammonia recovery device 9 are the same as those in Embodiment 1.

### <Operation of Ammonia Decomposition Apparatus according to Embodiment 2 of Present Disclosure>

Next, an operation of the ammonia decomposition apparatus 40 according to Embodiment 2 of the present disclosure will be described. An ammonia-containing gas is supplied to the burner 44 via the ammonia supply line 5, an oxygen-containing gas is supplied to the burner 44 via the oxygen supply line 7, and a part of ammonia of the starting material is combusted in the burner 44. In order to combust a part of the ammonia in the ammonia-containing gas in the burner 44, the ammonia-containing gas is heated in the first heater 43 to a temperature suitable for combustion in the burner 44. Note that, if the temperature becomes too high due to the heating in the first heater 43, the metallic material of the ammonia supply line 5 and the ammonia react with each other between the first heater 43 and the burner 44 to nitride the ammonia supply line 5.

With respect to this, in Embodiment 2, the hydrogen-containing gas is supplied to the ammonia-containing gas via the hydrogen supply line 46 before the ammonia-containing gas flowing through the ammonia supply line 5 is heated in the first heater 43. In this manner, the ammonia concentration in the ammonia-containing gas is reduced. Even when the ammonia-containing gas in which the ammonia concentration has reduced due to the supply of the hydrogen-containing gas is heated to a high temperature in the first heater 43, the metallic material of the ammonia supply line 5 and the ammonia are less likely to react with each other as compared to the case of the ammonia-containing gas to which no hydrogen-containing gas is supplied. In this manner, the nitridation of the ammonia supply line 5 can be suppressed.

The temperature of the ammonia-containing gas is raised by the combustion heat generated by the combustion of a part of ammonia in the burner 44, and the ammonia-containing gas that has raised in temperature and the ammonia combustion gas flow into the upstream space 2a. The mixed gas of the ammonia-containing gas and the combustion exhaust gas in the upstream space 2a passes through the catalyst 3 by the same operation as in Embodiment 1, flows out from the downstream space 2b as an outflow gas, and flows through the outflow gas line 8. The outflow gas flowing through the outflow gas line 8 exchanges heat with the ammonia-containing gas in the first heater 43, thereby heating the ammonia-containing gas and cooling the outflow gas. The outflow gas cooled in the first heater 43 is supplied to the consumption/storage equipment 10 via the outflow gas line 8 in a case where the unreacted ammonia contained in the outflow gas is small, and is supplied to the consumption/storage equipment 10 after ammonia is recovered from the outflow gas in the ammonia recovery device 9 in a case where the ammonia recovery device 9 is provided because the unreacted ammonia contained in the outflow gas cannot be ignored.

In this way, the concentration of ammonia in the ammonia-containing gas is reduced by supplying the hydrogen-containing gas to the ammonia-containing gas on the upstream side of the first heater 43, so that it is possible to suppress the nitridation of the ammonia supply line 5 on the downstream side of the first heater 43.

In addition, as in Embodiment 1, by adopting the configuration in which the hydrogen supply line 46 branches off from the outflow gas line 8, a part of the outflow gas can be supplied to the burner 44 as a hydrogen-containing gas. With such a configuration, it is not necessary to supply hydrogen from outside the ammonia decomposition apparatus 40, so that the ammonia decomposition apparatus 40 can be operated independently without depending on a device external to the ammonia decomposition apparatus 40.

In a case where a water-washing type device is used as the ammonia recovery device 9, from the viewpoint of thermal efficiency, it is preferable to recover heat from the outflow gas as much as possible before the outflow gas flows into the ammonia recovery device 9. In contrast, in Embodiment 2, the outflow gas is cooled by exchanging heat with the ammonia-containing gas in the first heater 43 before flowing into the ammonia recovery device 9, so that the amount of heat released from the outflow gas in the ammonia recovery device 9 (corresponding to a thermal loss) can be reduced. Therefore, a decrease in thermal efficiency of the ammonia decomposition apparatus 40 can be suppressed.

### <Modification Example of Ammonia Decomposition Apparatus according to Embodiment 2 of Present Disclosure>

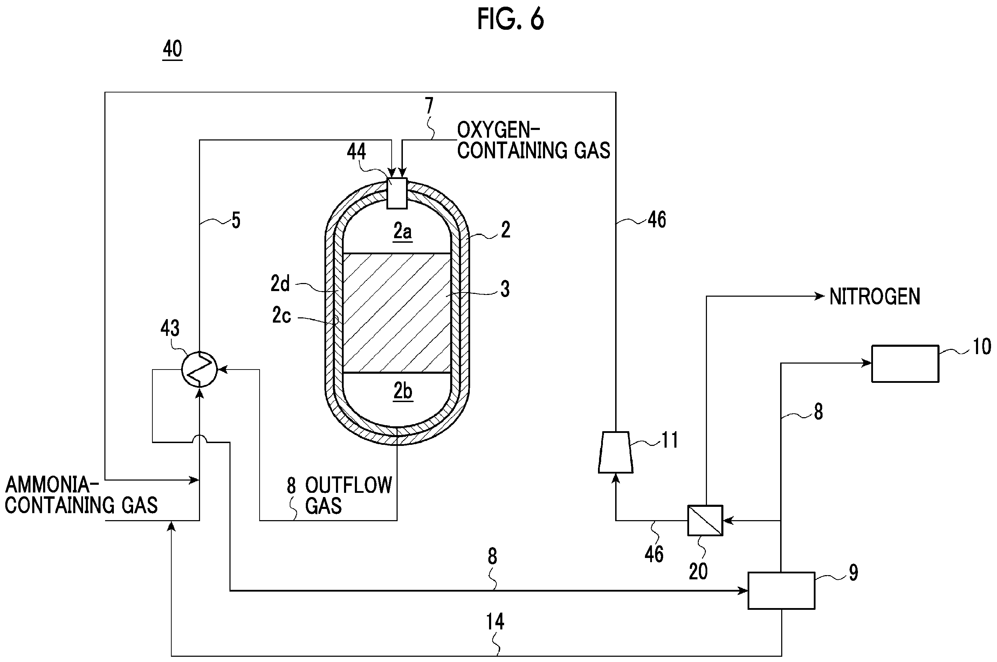

As shown in Fig. 6, in a case where the hydrogen-containing gas is a part of the outflow gas, the nitrogen removal device 20 that removes nitrogen from the hydrogen-containing gas flowing through the hydrogen supply line 46 may be provided in the hydrogen supply line 46. The configuration of the nitrogen removal device 20 is the same as that in Embodiment 1. By providing the nitrogen removal device 20 in the hydrogen supply line 46, a volumetric flow rate of the hydrogen-containing gas supplied to the ammonia-containing gas flowing through the ammonia supply line 5 can be reduced, so that the sizes of the hydrogen supply line 46 and the ammonia supply line 5 can be reduced. As a result, the ammonia decomposition apparatus 40 can be made compact.

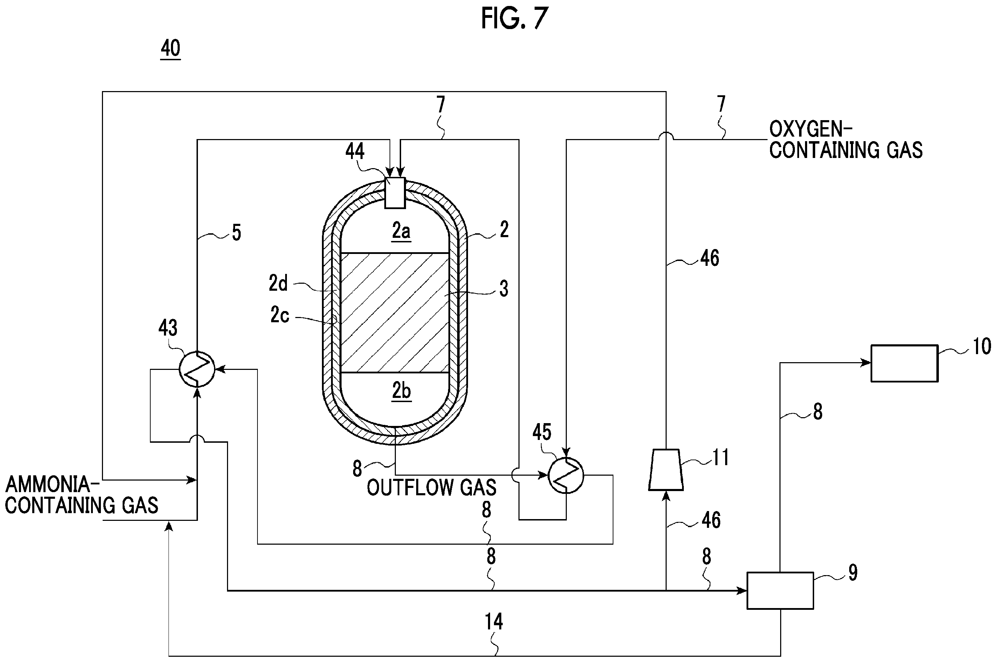

As shown in Fig. 7, a second heater 45 that exchanges heat between the oxygen-containing gas flowing through the oxygen supply line 7 and the outflow gas flowing out from the reactor 2 may be further provided. In this configuration, the oxygen-containing gas is heated by exchanging heat with the outflow gas in the second heater 45 and is supplied to the burner 44. In addition, the outflow gas that exchanges heat with the ammonia-containing gas in the first heater 43 is the outflow gas that has exchanged heat with the oxygen-containing gas in the second heater 45. In this configuration, the temperature of the oxygen-containing gas can be raised, so that the amount of heat recovery in the ammonia decomposition apparatus can be improved. In addition, since the amount of ammonia and oxygen consumed in the combustion in the burner 44 can be reduced by increasing the amount of heat recovery, the configuration of the ammonia decomposition apparatus 40 can also be made compact.

In Embodiment 2, the entire amount of the ammonia-containing gas flowing through the ammonia supply line 5 is supplied to the burner 44, but the present disclosure is not limited to this form. An oxygen branch line may be branched off from the oxygen supply line 7 and connected to the reactor 2 so as to communicate with the inside of the catalyst 3. In this form, a part of the oxygen-containing gas flowing through the oxygen supply line 7 is supplied into the catalyst 3. In a case where the oxygen branch line communicates with the inside of the catalyst 3, the ammonia branch line may be branched off from the ammonia supply line 5 and connected to the reactor 2 so as to communicate with the inside of the catalyst 3. In this form, a part of the ammonia-containing gas flowing through the ammonia supply line 5 is also supplied into the catalyst 3. Some specific and exemplary configurations of such forms will be described below.

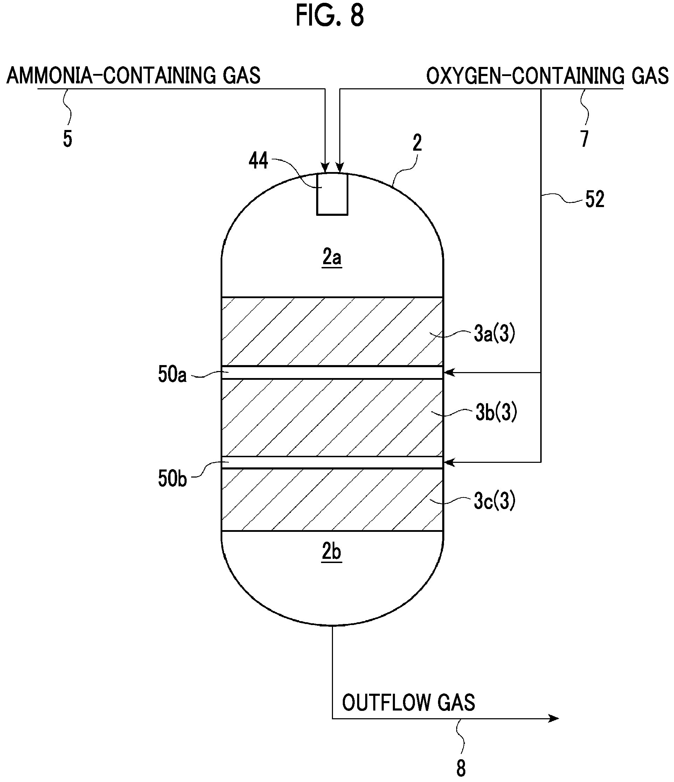

As shown in Fig. 8, the catalyst 3 is disposed to be divided into at least two stages in a direction from the burner 44 toward the outflow gas line 8 in the reactor 2. Fig. 8 illustrates a configuration in which the catalyst 3 is disposed to be divided into three stages 3a, 3b, and 3c. An oxygen branch line 52 branching off from the oxygen supply line 7 is configured to communicate with each of two spaces 50a and 50b respectively formed between the stages 3a and 3b adjacent to each other and between the stages 3b and 3c adjacent to each other.

In the configuration of Fig. 8, the oxygen-containing gas flowing into each of the spaces 50a and 50b via the oxygen branch line 52 moves to the stages 3a to 3c of the catalyst 3 and is mixed in the catalyst 3 with the mixed gas flowing into the catalyst 3 from the upstream space 2a. In this manner, a part of ammonia can be oxidized in the catalyst 3. That is, in the catalyst 3, the decomposition reaction of ammonia represented by Reaction Formula (1) and the oxidation reaction of ammonia occur. Heat generated when ammonia is oxidized can be used as heat for causing the decomposition reaction of ammonia, which is an endothermic reaction. In this manner, the temperature suitable for the decomposition reaction of ammonia can be maintained, and the decomposition reaction of ammonia can be sustained.

When the ammonia-containing gas and the oxygen-containing gas are mixed outside the reactor 2 and the mixed gas is supplied to the catalyst 3 when oxidizing the ammonia, an explosion may occur when the ammonia-containing gas and the oxygen-containing gas are mixed. Note that such a phenomenon does not occur unless oxygen and ammonia are mixed in a narrow region such as inside the pipe. In the configuration of Fig. 8, the oxygen-containing gas flowing into the spaces 50a and 50b diffuses within the catalyst 3 and is sufficiently diluted so that the oxygen concentration falls sufficiently below the explosive range, making such an explosion unlikely to occur.

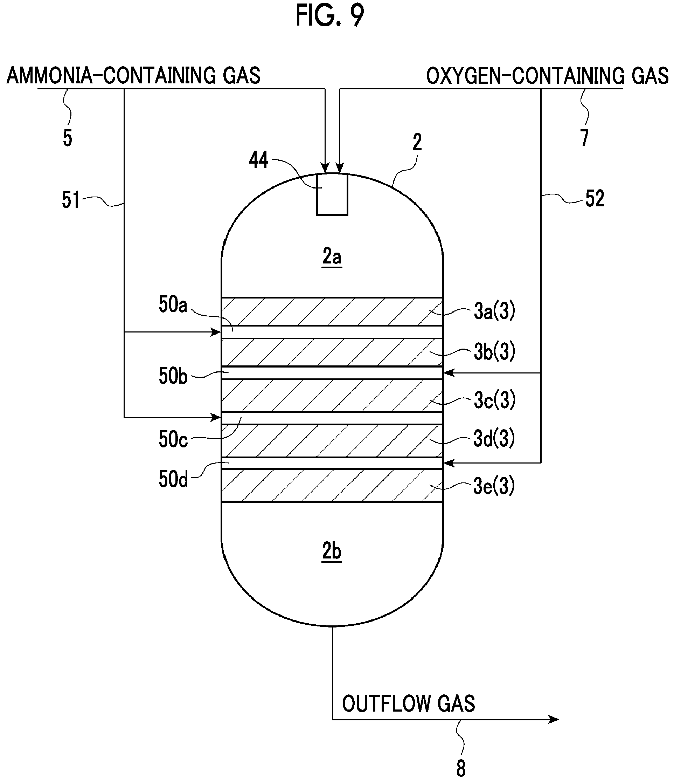

Fig. 9 illustrates a configuration in which not only the oxygen-containing gas but also a part of the ammonia-containing gas is supplied into the catalyst 3 with respect to the configuration of Fig. 8. In the exemplary configuration of Fig. 9, the catalyst 3 is disposed to be divided into five stages 3a, 3b, 3c, 3d, and 3e. An ammonia branch line 51 branching off from the ammonia supply line 5 is configured to communicate with each of two spaces 50a and 50c respectively formed between the stages 3a and 3b adjacent to each other and between the stages 3c and 3d adjacent to each other, and the oxygen branch line 52 branching off from the oxygen supply line 7 is configured to communicate with spaces that do not communicate with the ammonia branch line 51, that is, each of two spaces 50b and 50d respectively formed between the stages 3b and 3c adjacent to each other and between the stages 3d and 3e adjacent to each other.

In Fig. 9, the ammonia branch line 51 and the oxygen branch line 52 communicate with different spaces, that is, the ammonia branch line 51 and the oxygen branch line 52 are configured not to communicate with one space, but a configuration may be adopted in which there is a space with which both the ammonia branch line 51 and the oxygen branch line 52 communicate.

In the configuration of Fig. 9, the ammonia-containing gas and the oxygen-containing gas are supplied to separate spaces. Therefore, the ammonia-containing gas and the oxygen-containing gas are separately supplied into the catalyst 3 in a state of not being mixed with each other, and are mixed in the catalyst 3. In this manner, the risk of the explosion occurring when the ammonia-containing gas and the oxygen-containing gas are mixed can be further reduced. Note that, as described above, since the oxygen-containing gas flowing into the space inside the catalyst 3 diffuses within the catalyst 3 and is sufficiently diluted, the probability of such an explosion is low. Therefore, even in the configuration in which the ammonia-containing gas and the oxygen-containing gas are supplied to one space, the probability of such an explosion is low.

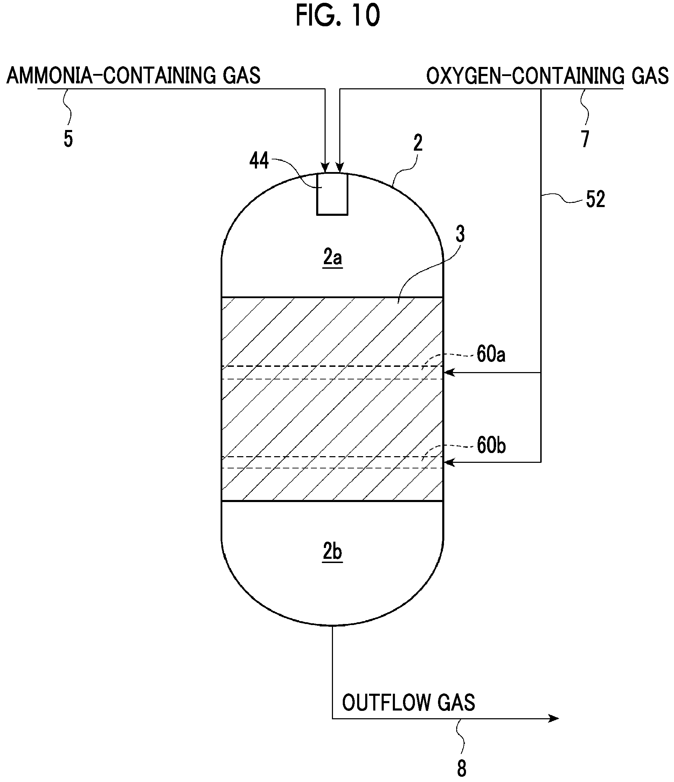

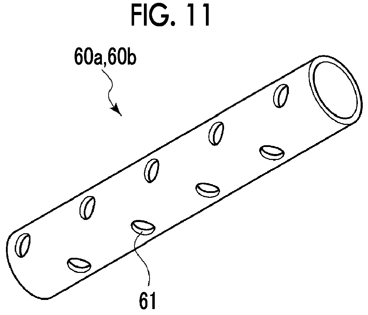

As shown in Fig. 10, one or more pipe members are disposed in the catalyst 3 in the reactor 2. Fig. 10 illustrates a configuration in which two pipe members 60a and 60b are disposed in the catalyst 3. As shown in Fig. 11, at least one hole 61 is formed in each of the pipe members 60a and 60b so as to allow an inside and an outside of the pipe members 60a and 60b to communicate with each other. As shown in Fig. 10, it is preferable that each of the pipe members 60a and 60b is provided at an interval in a direction from the burner 44 toward the outflow gas line in the catalyst 3. The oxygen branch line 52 communicates with each of the pipe members 60a and 60b.

In the configuration of Fig. 10, the oxygen-containing gas flowing into each of the pipe members 60a and 60b via the oxygen branch line 52 flows out to the outside of each pipe member via the hole 61 (see Fig. 11) formed in each pipe member. The oxygen-containing gas flowing out to the outside of each pipe member is mixed in the catalyst 3 with the mixed gas flowing into the catalyst 3 from the upstream space 2a. In this manner, a part of ammonia can be oxidized in the catalyst 3. Also in the configuration of Fig. 10, the temperature suitable for the decomposition reaction of ammonia can be maintained, and the decomposition reaction of ammonia can be sustained.

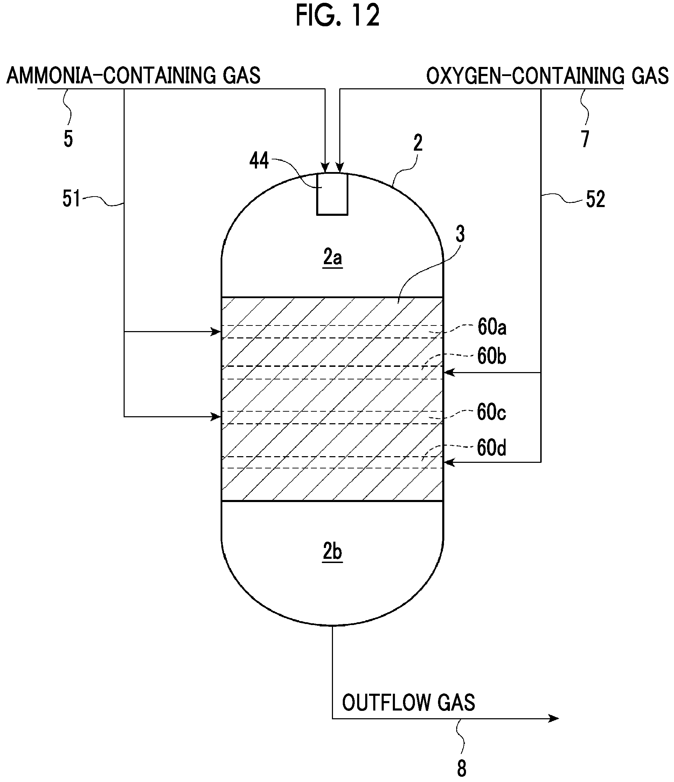

In addition, Fig. 12 illustrates a configuration in which not only the oxygen-containing gas but also a part of the ammonia-containing gas is supplied into the catalyst 3 with respect to the configuration of Fig. 10. In the exemplary configuration of Fig. 12, four pipe members 60a, 60b, 60c, and 60d are disposed in the catalyst 3. The configurations of the pipe members 60c and 60d are the same as the configurations of the pipe members 60a and 60b. The ammonia branch line 51 communicates with each of the pipe members 60a and 60c, and the oxygen branch line 52 communicates with the pipe members 60b and 60d.

In Fig. 12, the ammonia branch line 51 and the oxygen branch line 52 communicate with different pipe members, that is, the ammonia branch line 51 and the oxygen branch line 52 are configured not to communicate with one pipe member, but a configuration may be adopted in which there is a pipe member with which both the ammonia branch line 51 and the oxygen branch line 52 communicate.

In the configuration of Fig. 12, the ammonia-containing gas and the oxygen-containing gas are supplied into separate pipe members, and the ammonia-containing gas and the oxygen-containing gas supplied into each pipe member flow out to the outside of each pipe member via the hole 61 (see Fig. 11) formed in each pipe member. The ammonia-containing gas and the oxygen-containing gas flowing out to the outside of each pipe member are mixed in the catalyst 3. In this manner, the ammonia can be oxidized in the catalyst 3, and as a result, the temperature suitable for the decomposition reaction of ammonia can be maintained, and the decomposition reaction of ammonia can be sustained. Even in the configuration in which the ammonia-containing gas and the oxygen-containing gas are supplied to one pipe member, the probability of the explosion occurring when the ammonia-containing gas and the oxygen-containing gas are mixed is low for the same reason as the above-described reason in the configuration of Fig. 9.

The contents described in each of the embodiments are understood as follows, for example.

[1] According to one aspect, there is provided an ammonia decomposition apparatus including:
   a reactor (2) filled with a catalyst (3) for a decomposition reaction for decomposing ammonia, which is a starting material, into hydrogen and nitrogen;
   a burner (4) that is provided in the reactor (2) on an upstream side of the catalyst (3) and that is used for combusting hydrogen; and
   an ammonia supply line (5) through which ammonia is supplied into the reactor (2) on the upstream side of the catalyst (3).
   With the ammonia decomposition apparatus of the present disclosure, by using combustion heat of hydrogen from the burner as heat for causing the decomposition reaction of ammonia, which is an endothermic reaction, it is not necessary to raise a temperature of ammonia flowing through the ammonia supply line, or a degree of raising the temperature of the ammonia can be suppressed, so that it is possible to suppress nitridation of the ammonia supply line due to a reaction between high-temperature ammonia flowing through the ammonia supply line and a metallic material of the ammonia supply line.
[2] According to another aspect, the ammonia decomposition apparatus according to [1] further includes:
   a hydrogen supply line (6) through which a hydrogen-containing gas containing hydrogen is supplied to the burner (4); and
   an outflow gas line (8) through which an outflow gas containing hydrogen and nitrogen generated by decomposition of ammonia in the reactor (2) flows after flowing out from the reactor (2),
   in which the hydrogen supply line (6) branches off from the outflow gas line (8).
   With such a configuration, since the outflow gas containing hydrogen is used as a hydrogen-containing gas, it is not necessary to supply hydrogen from outside the ammonia decomposition apparatus, so that the ammonia decomposition apparatus can be operated independently without depending on a device external to the ammonia decomposition apparatus.
[3] According to still another aspect, the ammonia decomposition apparatus according to [2] further includes:
   a first heat exchanger (12) that exchanges heat between the outflow gas flowing through the outflow gas line (8) and the hydrogen-containing gas flowing through the hydrogen supply line (6); and
   a second heat exchanger (13) that exchanges heat between the outflow gas after the heat exchange with the hydrogen-containing gas in the first heat exchanger (12) and an ammonia-containing gas containing ammonia flowing through the ammonia supply line (5).
   When the outflow gas that has just flowed out from the reactor and the ammonia-containing gas exchange heat with each other, the temperature of the outflow gas becomes too high, and the temperature of the ammonia-containing gas becomes too high, which may cause the nitridation of the ammonia supply line. With respect to this, according to the configuration of [3], the outflow gas flowing out from the reactor exchanges heat with the hydrogen-containing gas, and the outflow gas whose temperature has lowered below the temperature at which the outflow gas flows out from the reactor exchanges with the ammonia-containing gas, whereby the temperature of the ammonia-containing gas can be raised to such an extent that the ammonia supply line is not nitrided, so that it is possible to suppress the nitridation of the ammonia supply line. In addition, the temperatures of the ammonia-containing gas and the hydrogen-containing gas can also be raised, so that it is possible to improve the amount of heat recovery in the ammonia decomposition apparatus.
[4] According to still another aspect, the ammonia decomposition apparatus according to [3] further includes:
   an oxygen supply line (7) through which an oxygen-containing gas containing oxygen is supplied to the burner (4); and
   a third heat exchanger (30) that exchanges heat between the oxygen-containing gas flowing through the oxygen supply line (7) and the outflow gas after the heat exchange with the hydrogen-containing gas in the first heat exchanger (12),
   in which the second heat exchanger (13) is configured to exchange heat between the outflow gas after the heat exchange with the oxygen-containing gas in the third heat exchanger (30) and the ammonia-containing gas flowing through the ammonia supply line (5).
   With such a configuration, after the outflow gas flowing out from the reactor exchanges heat with the hydrogen-containing gas, the outflow gas further exchanges heat with the oxygen-containing gas, and the outflow gas whose temperature has lowered below the temperature at which the outflow gas flows out from the reactor exchanges with the ammonia-containing gas, whereby the temperature of the ammonia-containing gas can be raised to such an extent that the ammonia supply line is not nitrided, so that it is possible to suppress the nitridation of the ammonia supply line. In addition, the temperatures of the ammonia-containing gas and the hydrogen-containing gas can also be raised, so that it is possible to improve the amount of heat recovery in the ammonia decomposition apparatus. Further, since the amount of hydrogen and oxygen consumed in the combustion in the burner can be reduced by increasing the amount of heat recovery, the configuration of the ammonia decomposition apparatus can also be made compact.
[5] According to still another aspect, the ammonia decomposition apparatus according to any one of [2] to [4] further includes:
   an ammonia recovery device (9) that is provided in the outflow gas line (8) and that recovers ammonia from the outflow gas,
   in which the hydrogen supply line (6) branches off from the outflow gas line (8) on a downstream side of the ammonia recovery device (9).
   The outflow gas contains unreacted ammonia in addition to hydrogen and nitrogen. However, with the configuration of [5], the outflow gas after the ammonia is removed from the outflow gas in the ammonia recovery device is supplied to the burner as a hydrogen-containing gas, so that it is possible to suppress consumption of a part of the unreacted ammonia through combustion in the burner.
[6] According to still another aspect, the ammonia decomposition apparatus according to any one of [2] to [4] further includes:
   an ammonia recovery device (9) that is provided in the outflow gas line (8) and that recovers ammonia from the outflow gas,
   in which the hydrogen supply line (6) branches off from the outflow gas line (8) on the upstream side of the ammonia recovery device (9).
   In a case where the decomposition rate of ammonia in the reactor is high and the unreacted ammonia contained in the outflow gas is small, such a configuration can be adopted. When such a configuration is adopted, a part of the outflow gas can be supplied to the burner as a hydrogen-containing gas without a pressure loss in the ammonia recovery equipment and a thermal loss due to cooling in the equipment, so that it is possible to improve the energy efficiency of the entire ammonia decomposition apparatus.
[7] According to still another aspect, the ammonia decomposition apparatus according to any one of [2] to [6] further includes:
   a nitrogen removal device (20) that is provided in the hydrogen supply line (6) and that removes nitrogen from the hydrogen-containing gas flowing through the hydrogen supply line (6).
   With such a configuration, the volumetric flow rate of the hydrogen-containing gas supplied to the burner can be reduced, so that the size of the hydrogen supply line and the size of the compressor in a case where the compressor for increasing the pressure of the hydrogen-containing gas is provided in the hydrogen supply line can be reduced. As a result, the ammonia decomposition apparatus can be made compact.
[8] According to one aspect, there is provided an ammonia decomposition apparatus including:
   a reactor (2) filled with a catalyst (3) for a decomposition reaction for decomposing ammonia, which is a starting material, into hydrogen and nitrogen;
   a burner (44) that is provided in the reactor (2) on an upstream side of the catalyst (3) and that is used for combusting a part of ammonia of the starting material;
   an ammonia supply line (5) through which an ammonia-containing gas containing ammonia, which is the starting material, is supplied to the burner (44);
   an outflow gas line (8) through which an outflow gas containing hydrogen and nitrogen generated by decomposition of ammonia in the reactor (2) flows after flowing out from the reactor (2);
   a first heater (43) that is used for heating the ammonia-containing gas flowing through the ammonia supply line (5), and that exchanges heat between the ammonia-containing gas and the outflow gas flowing through the outflow gas line (8); and
   a hydrogen supply line (46) through which a hydrogen-containing gas containing hydrogen is supplied to the ammonia-containing gas flowing through the ammonia supply line (5) on the upstream side of the first heater (43).
   With the ammonia decomposition apparatus of the present disclosure, since the ammonia-containing gas is heated in the first heater provided in the ammonia supply line through which the ammonia-containing gas is supplied to the burner, the ammonia and the metallic material of the ammonia supply line may react with each other downstream of the first heater, resulting in nitridation of the ammonia supply line. However, a concentration of the ammonia in the ammonia-containing gas is reduced by supplying the hydrogen-containing gas to the ammonia-containing gas on the upstream side of the first heater, so that it is possible to suppress the nitridation of the ammonia supply line downstream of the first heater.
[9] According to another aspect, in the ammonia decomposition apparatus according to [8],
   the hydrogen supply line (46) branches off from the outflow gas line (8) on a downstream side of the first heater (43).
   With such a configuration, since the outflow gas containing hydrogen is used as a hydrogen-containing gas, it is not necessary to supply hydrogen from outside the ammonia decomposition apparatus, so that the ammonia decomposition apparatus can be operated independently without depending on a device external to the ammonia decomposition apparatus.
[10] According to still another aspect, the ammonia decomposition apparatus according to [8] or [9] further includes:
   an oxygen supply line (7) through which an oxygen-containing gas containing oxygen is supplied to the burner (44); and
   an oxygen branch line (52) that branches off from the oxygen supply line (7) and through which a part of the oxygen-containing gas is supplied into the catalyst (3).
   With such a configuration, in the catalyst located downstream of the burner in the reactor, heat generated when a part of ammonia is oxidized can be used as heat for causing the decomposition reaction of ammonia, which is an endothermic reaction. In this manner, the temperature suitable for the decomposition reaction of ammonia can be maintained, and the decomposition reaction of ammonia can be sustained.
[11] According to still another aspect, in the ammonia decomposition apparatus according to [10],
   the catalyst (3) is disposed to be divided into at least two stages (3a, 3b, 3c, 3d, 3e) in a direction from the burner (44) toward the outflow gas line (8), and
   the oxygen branch line (52) is configured to communicate with at least one space (50a, 50b, 50c, 50d) formed between the stages adjacent to each other.
   With such a configuration, as in the configuration of [10], the temperature suitable for the decomposition reaction of ammonia can be maintained, and the decomposition reaction of ammonia can be sustained.
[12] According to still another aspect, the ammonia decomposition apparatus according to [10] further includes:
   one or more pipe members (60a, 60b, 60c, 60d) provided in the catalyst (3),
   in which at least one hole (61) is formed in each of the one or more pipe members (60a, 60b, 60c, 60d) to allow an inside and an outside of the one or more pipe members (60a, 60b, 60c, 60d) to communicate with each other, and
   the oxygen branch line (52) is configured to communicate with the one or more pipe members (60a, 60b, 60c, 60d).
   With such a configuration, as in the configuration of [10], the temperature suitable for the decomposition reaction of ammonia can be maintained, and the decomposition reaction of ammonia can be sustained.
[13] According to still another aspect, the ammonia decomposition apparatus according to [10] further includes:
   an ammonia branch line (51) that branches off from the ammonia supply line (5) and through which a part of the ammonia-containing gas flowing through the ammonia supply line (5) is supplied into the catalyst (3).
   With such a configuration, as in the configuration of [10], the temperature suitable for the decomposition reaction of ammonia can be maintained, and the decomposition reaction of ammonia can be sustained.
[14] According to still another aspect, in the ammonia decomposition apparatus according to [13],
   the catalyst (3) is disposed to be divided into at least two stages (3a, 3b, 3c, 3d, 3e) in a direction from the burner (44) toward the outflow gas line (8), and
   the ammonia branch line (51) is configured to communicate with at least one of at least one space (50a, 50b, 50c, 50d) formed between the stages adjacent to each other, and the oxygen branch line (52) is configured to communicate with at least one of the at least one space (50a, 50b, 50c, 50d).
   With such a configuration, as in the configuration of [10], the temperature suitable for the decomposition reaction of ammonia can be maintained, and the decomposition reaction of ammonia can be sustained.
[15] According to still another aspect, the ammonia decomposition apparatus according to [13] further includes:
   one or more pipe members (60a, 60b, 60c, 60d) provided in the catalyst (3),
   in which at least one hole (61) is formed in each of the one or more pipe members (60a, 60b, 60c, 60d) to allow an inside and an outside of the one or more pipe members (60a, 60b, 60c, 60d) to communicate with each other, and
   the ammonia branch line (51) is configured to communicate with at least one of the one or more pipe members (60a, 60b, 60c, 60d), and the oxygen branch line (52) is configured to communicate with at least one of the one or more pipe members (60a, 60b, 60c, 60d).
   With such a configuration, as in the configuration of [10], the temperature suitable for the decomposition reaction of ammonia can be maintained, and the decomposition reaction of ammonia can be sustained.
[16] According to still another aspect, the ammonia decomposition apparatus according to any one of [8] to [15] further includes:
   a nitrogen removal device (20) that is provided in the hydrogen supply line (46) and that removes nitrogen from the hydrogen-containing gas flowing through the hydrogen supply line (46).
   With such a configuration, a volumetric flow rate of the hydrogen-containing gas supplied to the ammonia-containing gas flowing through the ammonia supply line can be reduced, so that the sizes of the hydrogen supply line and the ammonia supply line can be reduced. As a result, the ammonia decomposition apparatus can be made compact.
[17] According to still another aspect, the ammonia decomposition apparatus according to any one of [8] to [16] further includes:
   an oxygen supply line (7) through which an oxygen-containing gas containing oxygen is supplied to the burner (44); and
   a second heater (45) that exchanges heat between the oxygen-containing gas flowing through the oxygen supply line (7) and the outflow gas flowing out from the reactor (2),
   in which the first heater (43) is configured to exchange heat between the outflow gas after the heat exchange with the oxygen-containing gas in the second heater (45) and the ammonia-containing gas flowing through the ammonia supply line (5).
   With such a configuration, the temperature of the oxygen-containing gas can be raised, so that the amount of heat recovery in the ammonia decomposition apparatus can be improved. Further, since the amount of ammonia and oxygen consumed in the combustion in the burner can be reduced by increasing the amount of heat recovery, the configuration of the ammonia decomposition apparatus can also be made compact.

### Reference Signs List

1: ammonia decomposition apparatus
2: reactor
3: catalyst
3a, 3b, 3c, 3d, 3e: stage (of catalyst)
4: burner
5: ammonia supply line
6: hydrogen supply line
7: oxygen supply line
8: outflow gas line
9: ammonia recovery device
12: first heat exchanger
13: second heat exchanger
20: nitrogen removal device
30: third heat exchanger
40: ammonia decomposition apparatus
43: first heater
44: burner
45: second heater
46: hydrogen supply line
50a, 50b, 50c, 50d: space
51: ammonia branch line
52: oxygen branch line
60a, 60b, 60c, 60d: pipe member
61: hole

## Claims

1. An ammonia decomposition apparatus comprising:
a reactor filled with a catalyst for a decomposition reaction for decomposing ammonia, which is a starting material, into hydrogen and nitrogen;
a burner that is provided in the reactor on an upstream side of the catalyst and that is used for combusting hydrogen; and
an ammonia supply line through which ammonia is supplied into the reactor o n the upstream side of the catalyst.

2. The ammonia decomposition apparatus according to Claim 1, further comprising:
a hydrogen supply line through which a hydrogen-containing gas containing hydrogen is supplied to the burner; and
an outflow gas line through which an outflow gas containing hydrogen and nitrogen generated by decomposition of ammonia in the reactor flows after flowing out from the reactor,
wherein the hydrogen supply line branches off from the outflow gas line.

3. The ammonia decomposition apparatus according to Claim 2, further comprising:
a first heat exchanger that exchanges heat between the outflow gas flowing through the outflow gas line and the hydrogen-containing gas flowing through the hydrogen supply line; and
a second heat exchanger that exchanges heat between the outflow gas after the heat exchange with the hydrogen-containing gas in the first heat exchanger and an ammonia-containing gas containing ammonia flowing through the ammonia supply line.

4. The ammonia decomposition apparatus according to Claim 3, further comprising:
an oxygen supply line through which an oxygen-containing gas containing oxygen is supplied to the burner; and
a third heat exchanger that exchanges heat between the oxygen-containing gas flowing through the oxygen supply line and the outflow gas after the heat exchange with the hydrogen-containing gas in the first heat exchanger,
wherein the second heat exchanger is configured to exchange heat between the outflow gas after the heat exchange with the oxygen-containing gas in the third heat exchanger and the ammonia-containing gas flowing through the ammonia supply line.

5. The ammonia decomposition apparatus according to any one of Claims 2 to 4, further comprising:
an ammonia recovery device that is provided in the outflow gas line and that recovers ammonia from the outflow gas,
wherein the hydrogen supply line branches off from the outflow gas line on a downstream side of the ammonia recovery device.

6. The ammonia decomposition apparatus according to any one of Claims 2 to 4, further comprising:
an ammonia recovery device that is provided in the outflow gas line and that recovers ammonia from the outflow gas,
wherein the hydrogen supply line branches off from the outflow gas line on the upstream side of the ammonia recovery device.

7. The ammonia decomposition apparatus according to any one of Claims 2 to 4, further comprising:
a nitrogen removal device that is provided in the hydrogen supply line and that removes nitrogen from the hydrogen-containing gas flowing through the hydrogen supply line.

8. An ammonia decomposition apparatus comprising:
a reactor filled with a catalyst for a decomposition reaction for decomposing ammonia, which is a starting material, into hydrogen and nitrogen;
a burner that is provided in the reactor on an upstream side of the catalyst and that is used for combusting a part of ammonia of the starting material;
an ammonia supply line through which an ammonia-containing gas containing ammonia, which is the starting material, is supplied to the burner;
an outflow gas line through which an outflow gas containing hydrogen and nitrogen generated by decomposition of ammonia in the reactor flows after flowing out from the reactor;
a first heater that is used for heating the ammonia-containing gas flowing through the ammonia supply line, and that exchanges heat between the ammonia-containing gas and the outflow gas flowing through the outflow gas line; and
a hydrogen supply line through which a hydrogen-containing gas containing hydrogen is supplied to the ammonia-containing gas flowing through the ammonia supply line on the upstream side of the first heater.

9. The ammonia decomposition apparatus according to Claim 8,
wherein the hydrogen supply line branches off from the outflow gas line on a downstream side of the first heater.

10. The ammonia decomposition apparatus according to Claim 8 or 9, further comprising:
an oxygen supply line through which an oxygen-containing gas containing oxygen is supplied to the burner; and
an oxygen branch line that branches off from the oxygen supply line and through which a part of the oxygen-containing gas is supplied into the catalyst.

11. The ammonia decomposition apparatus according to Claim 10,
wherein the catalyst is disposed to be divided into at least two stages in a direction from the burner toward the outflow gas line, and
the oxygen branch line is configured to communicate with at least one space formed between the stages adjacent to each other.

12. The ammonia decomposition apparatus according to Claim 10, further comprising:
one or more pipe members provided in the catalyst,
wherein at least one hole is formed in each of the one or more pipe members to allow an inside and an outside of the one or more pipe members to communicate with each other, and
the oxygen branch line is configured to communicate with the one or more pipe members.

13. The ammonia decomposition apparatus according to Claim 10, further comprising:
an ammonia branch line that branches off from the ammonia supply line and through which a part of the ammonia-containing gas flowing through the ammonia supply line is supplied into the catalyst.

14. The ammonia decomposition apparatus according to Claim 13,
wherein the catalyst is disposed to be divided into at least two stages in a direction from the burner toward the outflow gas line, and
the ammonia branch line is configured to communicate with at least one of at least one space formed between the stages adjacent to each other, and the oxygen branch line is configured to communicate with at least one of the at least one space.

15. The ammonia decomposition apparatus according to Claim 10, further comprising:
one or more pipe members provided in the catalyst,
wherein at least one hole is formed in each of the one or more pipe members to allow an inside and an outside of the one or more pipe members to communicate with each other, and
the ammonia branch line is configured to communicate with at least one of the one or more pipe members, and the oxygen branch line is configured to communicate with at least one of the one or more pipe members.

16. The ammonia decomposition apparatus according to Claim 8 or 9, further comprising:
a nitrogen removal device that is provided in the hydrogen supply line and that removes nitrogen from the hydrogen-containing gas flowing through the hydrogen supply line.

17. The ammonia decomposition apparatus according to Claim 8 or 9, further comprising:
an oxygen supply line through which an oxygen-containing gas containing oxygen is supplied to the burner; and
a second heater that exchanges heat between the oxygen-containing gas flowing through the oxygen supply line and the outflow gas flowing out from the reactor,
wherein the first heater is configured to exchange heat between the outflow gas after the heat exchange with the oxygen-containing gas in the second heater and the ammonia-containing gas flowing through the ammonia supply line.
